# EUROPÄISCHE PATENTSCHRIFT

(11) **EP 0 697 532 B1**
(45) Veröffentlichungstag und Bekanntmachung des Hinweises auf die Patenterteilung: **07.01.1998**
(21) Anmeldenummer: 95110694.7
(22) Anmeldetag: 08.07.1995
(51) Int. Cl.: F16B 21/07

(54) **Zweiteiliges Befestigungssystem**
Connecting system in two pieces
Système de fixation en deux pièces

(30) Priorität: 05.08.1994 DE 4427723
(43) Veröffentlichungstag der Anmeldung: 21.02.1996
(73) Patentinhaber: A. Raymond & Cie, F-38028 Grenoble-Cédex (FR)
(72) Erfinder: Boville, Daniel, F-75020 Paris (FR); Houte, Bernard, F-38240 Meylan (FR)
(74) Vertreter: Kirchgaesser, Johannes, Dipl.-Ing.

(56) Entgegenhaltungen:
- DE-C- 3 406 934
- FR-A- 2 559 558
- GB-A- 2 173 250
- GB-A- 2 244 318

## Beschreibung

Die Erfindung betrifft ein zweiteiliges Befestigungssystem, bestehend aus einem mit einer Trägerplatte verbundenen Verankerungsteil und einem auf dieses aufsteckbaren Befestigungkörper aus hartelastischem Kunststoff, welcher mit an das Verankerungsteil andrückbaren Klemmwänden versehen ist.

Derartige Befestigungssysteme sind bekannt durch **DE 34 06 934 C1**. Das Verankerungsteil besteht hierbei aus einem sogenannten Gewindebolzen, auf den der mutternartige Befestigungskörper mit seinen glatten, elastisch nachgiebigen Klemmwänden aufgedrückt wird. Die Gewindekanten schaben dabei an den Wänden vorbei und graben sich in der Haltestellung geringfügig in die Wände ein, so daß eine mehr oder weniger starke formschlüssige Verbindung entsteht, die durch Aufdrehen der Mutter leicht wieder gelöst werden kann.

Dieses Befestigungsprinzip kann beispielsweise zur Befestigung eines Kabelhalters, eines Kühlergrills oder auch anderer Bau- oder Funktionselemente im Kraftfahrzeugbau dienen, die mit dem klemmenden Grundkörper einstückig abgespritzt sind, welcher zur Befestigung auf dem Verankerungsteil vorgesehen ist.

Das Anbringen von Verankerungsteilen, wie z.B. T-Bolzen oder Gewindebolzen auf einem Träger aus plastischem Material, ist selbstverständlich technisch möglich. Wenn man jedoch eine Lösung sucht, die im Abspritzen dieser Halteelemente mit dem Träger in einem Arbeitsgang besteht, dann muß man relativ komplizierte und teure Spritzgießmaschinen einsetzen, deren Leistung unterhalb der einfachen Gießformen liegt, welche die Entformung in einer Ebene erlauben, oder aber man benutzt Gießformen, bei denen das Aufspritzen von Verankerungsteilen vorgesehen ist.

Eine andere Lösung besteht darin, die Träger ohne die Verankerungsteile zu gießen und diese auf dem ersteren in einem zweiten Arbeitsgang zu befestigen, z.B. durch Kleben, oder durch Reibschweißen mittels Rotationskontakt unter Druck. Diese zweite Lösung bietet offensichtlich den Nachteil, daß die Verankerungsteile gesondert hergestellt werden müssen und ihr Anbringen Extramittel und zusätzliche Zeit erfordert, was nicht zu vernachlässigende Zusatzkosten verursacht.

Aufgabe der Erfindung ist es, dens vorgenannten Befestigungskörper mit dem zugehörigen Verankerungsteil so zu gestalten, daß beide kostengünstig abgespritzt und problemlos entformt werden können. Eine weiter Aufgabe der Erfindung besteht darin, die zusammenwirkenden Verankerungsmittel so auszubilden, daß gleichzeitig stärkere Haltekräfte erzeugt werden.

Diese Aufgaben werden auf einfache Weise durch die im Anspruch 1 angegebenen Gestaltungsmerkmale gelöst, wobei durch das Eingraben der scharfkantigen Lamellen in die Rippen gleichzeitig eine enorme Steigerung der Haltekräfte erreicht wird.

In den Unteransprüchen sind zwei Realisierungsmöglichkeiten für das neue Verankerungsprinzip angegeben, welche je nach den örtlichen Gegebenheiten und dem Einsatzzweck ihre Vorzüge haben.

So kann das Verankerungsteil entsprechend den Merkmalen der Ansprüche 2 bis 4 als plattenförmiger Steg ausgebildet sein, auf den der Befestigungskörper mit zwei parallelen Klemmwänden von der Seite her aufgedrückt und gemäß Anspruch 5 in seiner Verankerungsposition sicher verriegelt wird.

Das Verankerungsteil kann entsprechend den Merkmalen der Ansprüche 6 und 7 aber auch als gerippter Bolzen und das Aufsteckteil entsprechend als Hülse ausgebildet sein, wobei letztere zunächst in Achsrichtung auf den Bolzen aufgedrückt und dann die Lamellen und Rippen durch eine Vierteldrehung in Eingriff gebracht werden.

### Zeichnungsbeschreibung:

Die vorgenannten Ausführungsbeispiele der Erfindung sollen nachfolgend anhand der beigefügten Zeichnungen näher erläutert werden. Es zeigt
- Fig. 1: das Verankerungsteil in Form eines plattenförmigen Steges in Seitenansicht,
- Fig. 2: eine Vorderansicht dieses Plattensteges,
- Fig. 3: eine Draufsicht auf diesen Plattensteg,
- Fig. 4: den zugehörigen Befestigungskörper in Seitenansicht,
- Fig. 5: den gleichen Befestigungskörper in Vorderansicht mit Blick auf die Eingangsöffnung,
- Fig. 6: den gleichen Befestigungskörper in Draufsicht,
- Fig. 7: den Befestigungskörper gemäß Figuren 4 bis 6 vor dem Aufdrücken auf den Plattensteg nach Figuren 1 bis 3,
- Fig. 8: den Befestigungskörper nach dem Aufdrücken auf den Plattensteg im Schnitt,
- Fig. 9: die gleiche Montagesituation in Vorderansicht,
- Fig. 10: die gleiche Montagesituation in Draufsicht,
- Fig. 11: das Verankerungsteil in der Form eines gerippten Bolzens in Vorderansicht,
- Fig. 12: der gerippte Bolzen in Draufsicht,
- Fig. 13: den zugehörigen Befestigungskörper in der Form einer Hülse im Axialschnitt,
- Fig. 14: die Befestigungshülse im Radialschnitt,
- Fig. 15: die Befestigungshülse vor dem Aufdrücken auf dem gerippten Bolzen,
- Fig. 16: die Befestigungshülse nach dem Aufdrücken auf dem gerippten Bolzen im Axialschnitt,
- Fig. 17: die auf dem Bolzen aufgedrückte Befestigungshülse vor der Verankerung im Radialschnitt und
- Fig. 18: die auf dem Bolzen aufgedrückte Befestigungshülse nach der Verankerung im Radialschnitt.

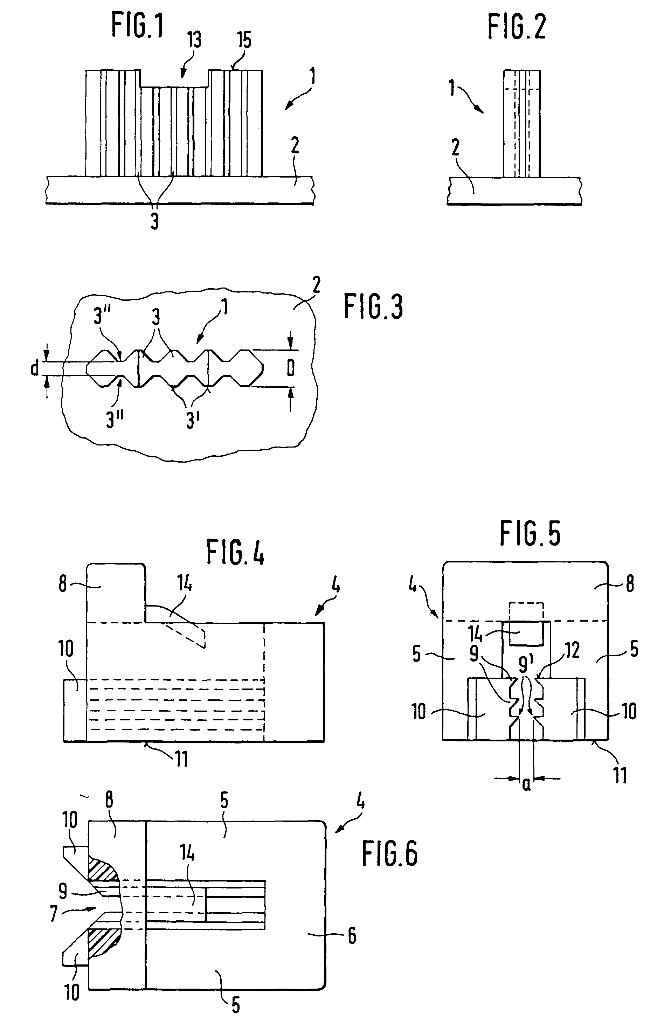

In den Fig. 1 bis 3 ist ein Verankerungsteil in Form eines plattenförmigen Steges **1** dargestellt, welcher etwa rechtwinklig mit einer Trägerplatte **2** einstückig verbunden und aus verhältnismäßig weichem thermoplastischen Kunststoffmaterial gespritzt ist. Der Plattensteg **1** ist auf beiden Seiten mit mehreren, zueinander parallelen Rippen **3** versehen, welche an ihren Kämmen **3'** abgestumpft sind und von der Trägerplatte **2** etwa senkrecht wegstreben. An der Oberkante **15** des Plattenstegs **1** ist eine flache Aussparung **13** vorgesehen,

In den Fig. 4 bis 6 ist der zugehörige Befestigungskörper **4** abgebildet, welches aus hartelastischem Kunststoff hergestellt ist und in irgend ein Halte- oder Befestigungskörper integriert sein kann. Zum Aufstecken auf den vorgenannten Plattensteg **1** besitzt der Befestigungskörper **4** eine U-förmige Grundform mit zwei zueinander parallelen Klemmwänden **5**, die an ihrem einen Ende durch eine Querwand **6** verbunden sind und an ihrem entgegengesetzten Ende über ihre ganze Höhe eine Öffnung **7** zum Einführen des Plattenstegs **1** aufweisen. Die Klemmwände **5** sind hierbei zur Versteifung oberhalb der Öffnung **7** durch ein Querhaupt **8** miteinander verbunden.

Auf den Klemmwänden **5** sind an deren Innenseiten mehrere, zum Boden **15** der Klemmwände **5** parallele scharfkantige Lamellen **9** übereinander angeformt, die sich beim Aufstecken auf den Plattensteg **1** mit den Rippen **3** kreuzen und sich dabei zumindest teilweise in die Rippenkämme **3'** eingraben. Die Lamellen **9** bilden im Querschnitt einen spitzen Winkel, dessen vom Boden **11** abgewandter Schenkel **12** etwa senkrecht auf die Klemmwand **5** gerichtet ist.

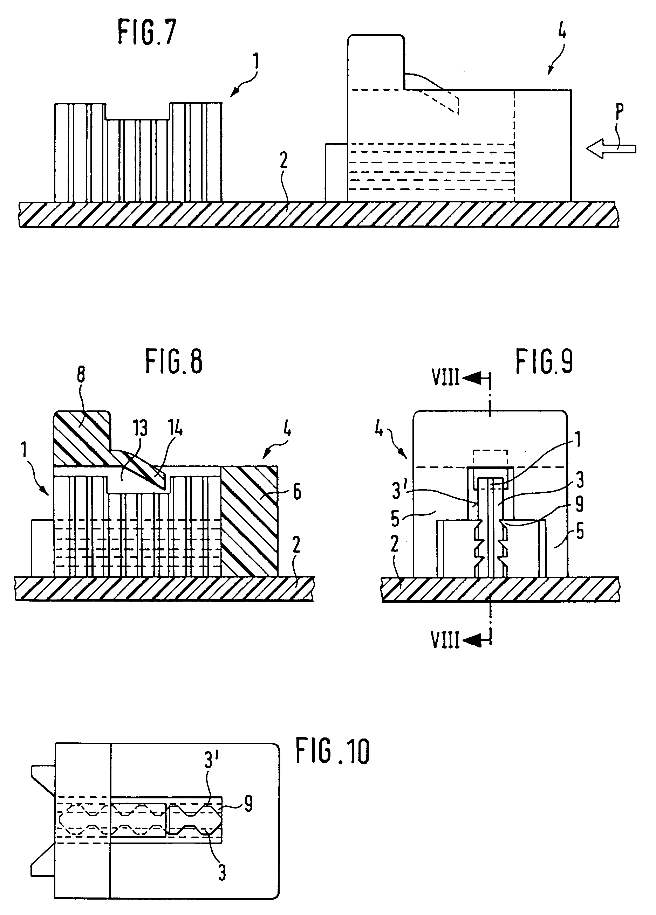

Die Klemmwände **5** sind an der Öffnungsseite, d.h. beiderseits der Öffnung **7** mit schräg nach außen gerichteten Einführwänden **10** versehen, wobei die Lamellenkanten **9'** an der Öffnungsseite in gleicher Weise abgeschrägt sind. Am Querhaupt **8** ist auf dessen Rückseite ein zwischen die Klemmwände **5** schräg nach unten weisender Verriegelungsfinger **14** auffederbar angeformt, dessen Zweck aus der Fig. 8 erkennbar wird.

Damit die Lamellen **9** sich beim Aufdrücken der Klemmwände **5** auf die Rippen **3** des Plattenstegs **1** auch sicher in die Rippenkämme **3'** eingraben, ist bei der Formgebung darauf zu achten, daß der Abstand "a" zwischen den einander gegenüberliegenden Lamellenkanten **9'** kleiner ist als die Dicke "D" des Plattensteges **1** - gemessen an den Rippenkämmen **3'** - und größer als die Dicke des Steges **1** - gemessen am Rippengrund **3''**.

In Fig. 7 ist der Befestigungskörper **4** beim Aufdrücken auf den gerippten Plattensteg **1** dargestellt. Hierbei ist letzterer mit einer Trägerplatte **2** einstückig verbunden, während der Befestigungskörper **4** über die Trägerplatte **2** in Richtung des Pfeiles "P" auf den Plattensteg **1** aufgedrückt wird.

In den Fig. 8 bis 10 ist das Befestigungskörper **4** nach dem Aufdrücken auf den Plattensteg **1** dargestellt, wobei in der Vorderansicht (Fig.9) und der Draufsicht (Fig.10) deutlich zu erkennen ist, wie die Lamellen **9** sich mit ihren scharfen Kanten **9'** in die Rippenkämme **3'** des Plattensteges **1** eingegraben haben.

Im Schnittbild nach Fig.8 ist ferner erkennbar, wie der vom Querhaupt **8** nach rückwärts abstehende Verriegelungsfinger **14** in die obere Aussparung **13** des Plattensteges **1** eingerastet ist und dadurch ein unbeabsichtigtes Zurückschieben des Befestigungskörpers **4** unmöglich gemacht wird, so daß die einmal vorgenommene Verankerung auch absolut sicher hält und nur durch Zurückbiegen des Fingers **14** wieder gelöst werden kann.

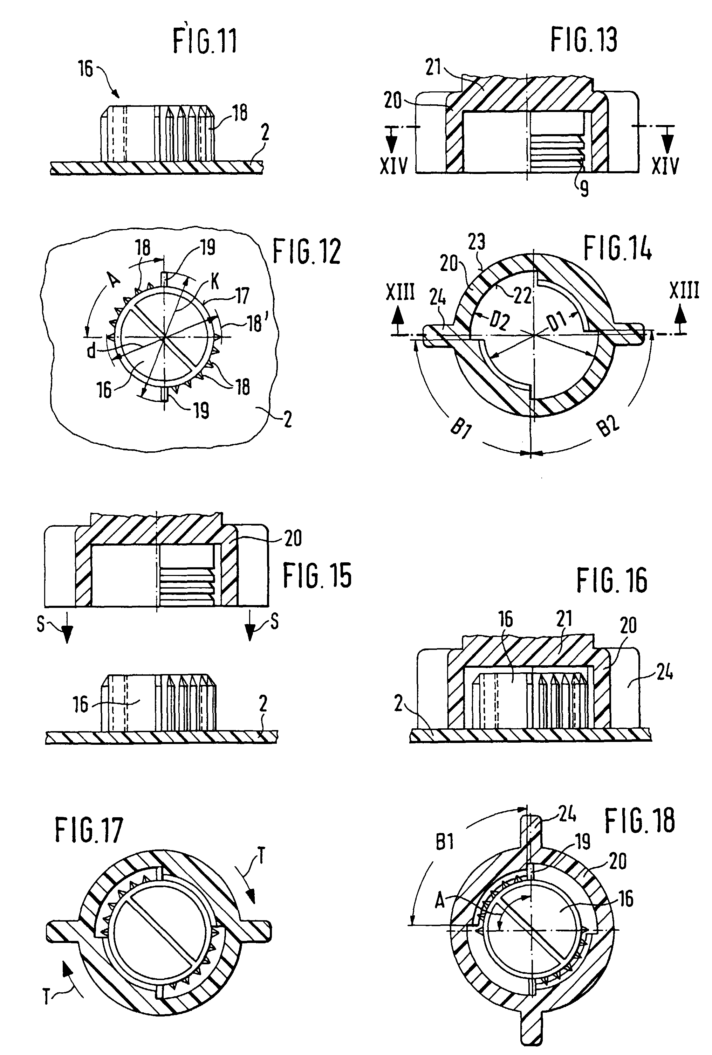

In den Fig. 11 und 12 ist das Verankerungsteil in Form eines Bolzens **16** dargestellt, welcher - genau wie der Plattensteg **1** - etwa rechtwinklig mit der Trägerplatte **2** einstückig verbunden und aus verhältnismäßig weichem thermoplastischen Kunststoffmaterial hergestellt ist. Der Bolzen **16** ist an seiner Mantelfläche **17** auf zwei diametral gegenüberliegenden Bereichen "**A**" von je 1/4 des Kreisumfangs mit mehreren, achsparallelen Rippen **18** versehen.

Außerdem sind auf der Mantelfläche **17** jeweils an einem Ende der Rippenbereiche "**A**" Anschlagrippen **19** angeformt, welche genau um 180° versetzt angeordnet sind und etwas über die Rippen **18** hinausragen.

In den Fig. 13 und 14 ist im Schnitt eine auf den Bolzen **16** aufsteckbare zylindrische Hülse **20** dargestellt, welche mit einer Kappe **21** verschlossen oder in irgend ein in der Zeichnung nicht dargestelltes Halte- oder Befestigungselement integriert sein kann.

An der Innenwand **22** der Hülse **20** sind über je zwei Viertelbogenbereiche "**B1**" mehrere scharfkantige Lamellen **9** überander und radial nach innen abstehend angeformt, während in den dazwischenliegenden Bereichen "**B2**" die Innenwand **22** glatt ist. In diesen Bereichen ist der Innendurchmesser "**D2**" der Innenwand **22** deutlich größer als der Außendurchmesser "**d**" des Bolzens **16** an den Rippenkämmen **18'** und gleich oder nur geringfügig größer als der Kammabstand "**K**" über den Anschlagrippen **19**.

Demgegenüber ist der Innendurchmesser "**D1**" zwischen den einander gegenüberliegenden Lamellenkanten **9'** etwas kleiner als der Außendurchmesser "**d**" an den Rippenkämmen **18'**. An der Außenwand **23** der Hülse **20** sind genau gegenüberliegend zwei Flügelrippen **24** angeformt, mit welchen die Befestigungshülse **20** von Hand gedreht werden kann.

Die Wirkungsweise dieser Befestigungsvariante ist in den Fig. 15 bis 18 anschaulich dargestellt. Fig. 15 zeigt die Befestigungshülse **20** beim Aufdrücken auf den gerippten Bolzen **16** in Richtung der Pfeile "**S**", wobei die Hülse **20** zum Bolzen **16** so ausgerichtet sein muß, daß der Lamellenbereich "**B1**" genau über dem Bereich "**A2**" zwischen den Rippen **18** angeordnet ist. In dieser Lage läßt sich die Befestigungshülse **20** bis auf die Trägerplatte **2** niederdrücken (siehe Fig. 16/17.

Sodann wird die Befestigungshülse **20** mittels der Flügelblätter **24** in Richtung der Pfeile "T" um 90° gedreht, bis die Lamellenbereiche "**B1**" gegen die Anschlagrippen **19** anliegen (Fig.18). Während dieser Drehbewegung haben die scharfen Kanten **18'** der Lamellen **18** sich in die Kämme **9'** der Rippen **9** eingegraben und sorgen nun für einen festen Halt zwischen Hülse **20** und Bolzen **16**. Diese Verbindung läßt sich nur lösen, wenn die Hülse **20** mittels der Flügelblätter **24** wieder um 90° in die Ausgangslage zurückgedreht werden (Fig.17).

## Patentansprüche

1. Zweiteiliges Befestigungssystem, bestehend aus einem mit einer Trägerplatte (2) verbindbarem Verankerungsteil (1) und einem auf dieses aufsteckbaren Befestigungskörper (4) aus hartelastischem Kunststoff, welcher mit an das Verankerungsteil (1) andrückbaren Klemmwänden (5) versehen ist,
**dadurch gekennzeichnet,** daß das Verankerungsteil (1,16) aus verhältnismäßig weichem Kunststoff besteht und mit mehreren, zueinander parallelen Rippen ( 3,18 ) versehen ist, welche von der Trägerplatte (2) senkrecht wegführen, und daß auf den Klemmwänden ( 5 ) des Befestigungskörpers ( 4,20 ) scharfkantige Lamellen ( 9 ) angeformt sind, die sich beim Aufstecken auf das Verankerungsteil (1,16 ) mit den Rippen ( 3,18 ) kreuzen und sich dabei zumindest teilweise in die Rippenkämme ( 3',18' ) eingraben.

2. Befestigungssystem nach Anspruch 1, dadurch gekennzeichnet, daß das Verankerungsteil als plattenförmiger Steg ( 1 ) ausgebildet ist, und daß die Klemmwände ( 5 ) des Befestigunskörpers (4) zueinander parallel verlaufen, an ihrem einen Ende durch eine Querwand ( 6 ) verbunden sind und an ihrem entgegengesetzten Ende über ihre ganze Höhe eine Öffnung ( 7 ) zum Einführen des plattenförmigen Stegs ( 1 ) aufweisen, wobei die Klemmwände ( 5 ) im Bereich oberhalb der Öffnung ( 7 ) durch ein Querhaupt ( 8 ) miteinander verbunden sind.

3. Befestigungssystem nach Anspruch 2, dadurch gekennzeichnet, daß die Klemmwände ( 5 ) an der Öffnungsseite mit schräg nach außen gerichteten Einführwänden ( 10 ) versehen sind, wobei die Lamellenkanten ( 9' ) im Bereich der Öffnung (7) in gleicher Weise angeschrägt sind.

4. Befestigungssystem nach Anspruch 1 bis 3, dadurch gekennzeichnet, daß der Abstand (a) zwischen den einander gegenüberliegenden Lamellenkanten ( 9' ) kleiner ist als die Dicke (D) des plattenförmigen Steges ( 1 ) - gemessen an den Rippenkämmen ( 3' ) - und größer als die Dicke (d) des Steges ( 1 ) - gemessen am Rippengrund (3").

5. Befestigungssystem nach Anspruch 1 bis 4, dadurch gekennzeichnet, daß vom Querhaupt (8) ein zwischen die Klemmwände (5) schräg nach unten weisender Verriegelungsfinger (14) auffederbar angeformt ist, welcher in der Verankerungsposition in eine Aussparung (13) des Plattenstegs (1) einrastet.

6. Befestigungssystem nach Anspruch 1, dadurch gekennzeichnet, daß das Verankerungsteil als Bolzen ( 16 ) ausgebildet ist, dessen Mantelfläche ( 17 ) auf zwei diametral gegenüberliegenden Bereichen ( A ) von je 1/4 des Kreisumfangs mit achsparallenen Rippen ( 18 ) versehen ist, und daß der Befestigungkörper als zylinderförmige Hülse ( 20 ) ausgebildet ist, auf deren Innenwand ( 22 ) über je zwei Viertelbereiche (B1) mehrere scharfkantige Lamellen (9) übereinander und radial nach innen abstehend angeformt sind, wobei der Innendurchmesser (D2) der Zylinderwände ( 21 ) im Bereich zwischen den Lamellen ( 9 ) größer ist als der Außendurchmesser (d) des Bolzens ( 16 ) - gemessen an den Rippenkämmen ( 18' ) - und wobei der Innendurchmesser (D1) zwischen den einander gegenüberliegenden Lamellenkanten ( 9' ) kleiner ist als der Außenduchmesser (d) an den Rippenkämmen (18').

7. Befestigungssystem nach Anspruch 6, dadurch gekennzeichnet, daß auf der Mantelfläche (17) des Bolzens (16) jeweils an einem Ende der Rippenbereiche (A) Anschlagrippen (19) angeformt sind, welche genau um 180° versetzt angeordnet sind und dabei soweit über die Rippenkämme ( 18' ) hinausragen, daß ihr äußerer Kammabstand (K) gleich oder geringfügig kleiner ist als der Innendurchmesser (D2) der Zylinderwand (21) im Bereich (B2) zwischen den Lamellen (9).

## Claims

1. A two-part fixing system comprising an anchorage part (1) which can be connected to a carrier plate (2), and a fixing body (4) of hard-elastic plastics material which can be fitted on to the anchorage part and which is provided with clamping walls (5) which can be pressed against the anchorage part (1), characterised in that the anchorage part (1, 16) comprises comparatively soft plastics material and is provided with a plurality of mutually parallel ribs (3, 18) which lead perpendicularly away from the carrier plate (2) and that formed on the clamping walls (5) of the fixing body (4, 20) are sharp-edged bar portions (9) which upon being fitted on to the anchorage part (1, 16) cross the ribs (3, 18) and in that condition at least partially dig into the rib crests (3', 18').

2. A fixing system according to claim 1 characterised in that the anchorage part is in the form of a plate-shaped web (1) and that the clamping walls (5) of the fixing body (4) extend in mutually parallel relationship, are connected at their one end by a transverse wall (6) and at their opposite end have over their entire height an opening (7) for insertion of the plate-shaped web (1), wherein the clamping walls (5) are connected together by a crossbar portion (8) in the region above the opening (7).

3. A fixing system according to claim 2 characterised in that at the opening side the clamping walls (5) are provided with inclinedly outwardly directed insertion walls (10), wherein the edges (9') of the bar portions are bevelled in the same manner in the region of the opening (7).

4. A fixing system according to claims 1 to 3 characterised in that the spacing (a) between the mutually oppositely disposed edges (9') of the bar portions is less than the thickness (D) of the plate-shaped web (1) - measured at the rib crests (3')-and greater than the thickness (d) of the web (1) - measured at the rib bottom (3").

5. A fixing system according to claims 1 to 4 characterised in that from the crossbar portion (8) a locking finger (14) which points inclinedly downwardly between the clamping walls (5) is upwardly resiliently movably formed thereon, the locking finger engaging in the anchorage position into an opening (13)in the plate web (1).

6. A fixing system according to claim 1 characterised in that the anchorage part is in the form of a pin (16) whose peripheral surface (17) is provided with ribs (18) extending parallel to the axis on two diametrally oppositely disposed regions (A) each of a quarter of the circumference of the circle, and that the fixing body is in the form of a cylindrical sleeve (20), on the inside wall (22) of which are formed a plurality of sharp-edged bar portions (9) in mutually superposed relationship and projecting radially inwardly, over two quarter regions (B1) respectively, wherein the inside diameter (D2) of the cylindrical walls (21) in the region between the bar portions (9) is greater than the outside diameter (d) of the pin (16) - measured at the rib crests (18') - and wherein the inside diameter (D1) between the mutually oppositely disposed bar portion edges (9') is smaller than the outside diameter (d) at the rib crests (18').

7. A fixing system according to claim 6 characterised in that formed on the peripheral surface (17) of the pin (16) at an end of each of the rib regions (A) are abutment ribs (19) which are arranged displaced precisely through 180° and in that case project beyond the rib crests (18') to such an extent that their outer crest spacing (K) is equal to or slightly less than the inside diameter (D2) of the cylindrical wall (21) in the region (B2) between the bar portions (9).

## Revendications

1. Système de fixation en deux parties, se composant d'un élément d'ancrage (1) destiné à être relié à une plaque support (2) et d'un organe de fixation (4) en matière plastique à cédage élastique dur destiné à être emmanché sur celui-ci, qui est muni de parois de serrage (5) destinées à être appliquées sur l'élément d'ancrage (1), caractérisé en ce que l'élément d'ancrage (1, 16) est réalisé dans une matière plastique relativement tendre et est muni de plusieurs nervures (3, 18) parallèles les unes aux autres, qui s'étendent verticalement depuis la plaque support (2), et en ce que des segments à arêtes vives sont réalisés solidaires par formage des parois de serrage (5) de l'organe de fixation (4, 20) qui, lors de l'emmanchement sur l'élément d'ancrage (1, 16) se croisent avec les nervures (3, 18) et viennent s'encastrer, au moins partiellement, dans les sommets des nervures (3', 18').

2. Système de fixation selon la revendication 1, caractérisé en ce que l'élément d'ancrage se présente sous la forme d'une barrette en forme de plaque (1) et en ce que les parois de serrage (5) de l'organe de fixation (4) sont respectivement parallèles, sont reliées au niveau de l'une de leurs extrémités par une paroi transversale (6) et présentent, au niveau de leur extrémité opposée, sur toute leur hauteur, une ouverture (7) pour l'introduction de la barrette en forme de plaque (1), les parois de serrage (5) étant en l'occurrence reliées ensemble par une traverse d'entretoisement (8) dans la zone se trouvant au-dessus de l'ouverture (7).

3. Système de fixation selon la revendication 2, caractérisé en ce que les parois de serrage (5) sont munies, sur le côté de leur ouverture, de parois d'introduction (10) orientées obliquement vers l'extérieur, les bords (9') des segments étant en l'occurrence chanfreinés de manière identique.

4. Système de fixation selon les revendications 1 à 3, caractérisé en ce que l'intervalle d'écartement ("a") entre les bords (9') des segments qui se font respectivement face est plus petit que l'épaisseur ("D") de la barrette en forme de plaque (1), mesurée au niveau des sommets (3') des nervures, et plus grand que l'épaisseur ("d") de la barrette en forme de plaque (1), mesurée au fond des sommets (3") des nervures.

5. Système de fixation selon les revendications 1 à 4, caractérisé en ce que, partant de la traverse d'entretoisement (8), un doigt de verrouillage (14), orienté obliquement vers le bas, est réalisé solidaire par moulage avec la possibilité de se déformer de manière élastique qui, dans la position d'ancrage, vient s'accrocher dans un évidement (13) de la barrette en forme de plaque (1).

6. Système de fixation selon la revendication 1, caractérisé en ce que l'élément d'ancrage se présente sous la forme d'un goujon (16), dont la surface périphérique (17) est munie, sur deux zones (A) diamétralement opposées, correspondant respectivement à 1/4 de sa circonférence, de nervures (18) disposées parallèlement à l'axe, et en ce que l'organe de fixation est réalisé sous la forme d'une douille (20) de forme cylindrique, sur la paroi intérieure (22) de laquelle, respectivement au-dessus de deux quarts de circonférence ("B1"), plusieurs segments (9) à arêtes vives sont réalisés solidaires par moulage disposés les uns au-dessus des autres et faisant saillie de manière radiale vers l'intérieur, le diamètre intérieur ("D2") des parois cylindriques (21) étant en l'occurrence, dans la zone se trouvant entre les segments (9), plus grand que le diamètre extérieur ("d") du goujon (16), mesuré au niveau des sommets (18') des nervures, et le diamètre intérieur ("D1") étant en l'occurrence, dans la zone se trouvant entre les bords (9') des segments se faisant respectivement face, plus petit que le diamètre extérieur ("d") au niveau des sommets (18') des nervures.

7. Système de fixation selon la revendication 6, caractérisé en ce que, sur la surface périphérique (17) du goujon (16) des nervures de butée (19) sont réalisées solidaires par moulage respectivement à une extrémité des zones nervurées ("A"), qui sont exactement disposées décalées de 180° et font en l'occurrence saillie au-dessus des sommets (18') des nervures dans une proportion telle que l'intervalle d'écartement extérieur entre leurs sommets ("K") est égal au, ou légèrement plus petits que le diamètre intérieur ("D2") de la paroi cylindrique (21) dans la zone ("B2") entre les segments (9).
